# EUROPEAN PATENT APPLICATION

(11) **EP 4 220 770 A1**
(43) Date of publication of application: **02.08.2023**
(21) Application number: 21872219.7
(22) Date of filing: 10.09.2021
(51) Int. Cl.: H01M 4/505, H01M 4/525, H01M 10/052, H01M 10/0568, H01M 10/44, H01M 10/48, H02J 7/04, H02J 7/10

(54) **SECONDARY BATTERY CHARGING METHOD AND CHARGING SYSTEM**

(30) Priority: 28.09.2020 JP 2020162691
(71) Applicant: Panasonic Intellectual Property Management Co., Ltd., Osaka-shi, Osaka 540-6207 (JP)
(72) Inventor: FUKUOKA, Takahiro, Osaka-shi, Osaka 540-6207 (JP); KANO, Akira, Osaka-shi, Osaka 540-6207 (JP)
(74) Representative: Novagraaf International SA
(86) International application number: PCT/JP2021/033393
(87) International publication number: WO 2022/065088

(57) **Abstract**

A method of charging a lithium secondary battery including: a step of charging the lithium secondary battery based on any of a first charging profile and a second charging profile, wherein the first charging profile includes at least two charging steps, the second charging profile includes more charging steps than the first charging profile, at a starting point of the step of charging the secondary battery, the first charging profile is selected when the secondary battery has a depth of discharge of less than a predetermined threshold, and the second charging profile is selected when the secondary battery has a depth of discharge of the threshold or more.

## Description

### [Technical Field]

The present disclosure relates to a method of charging a secondary battery and a charging system.

### [Background Art]

Non-aqueous electrolyte secondary batteries represented by lithium ion secondary batteries have high energy density and high output, and expected to be promising as a power supply of mobile devices such as smart-phones, a power source of a vehicle such as an electric vehicle, and a storage device of natural energy such as sunlight.

Patent Literature 1 has proposed, to achieve a high capacity battery, a non-aqueous electrolyte secondary battery in which lithium metal deposits during charging on the negative electrode current collector, and the lithium metal dissolves during discharging.

Patent Literature 2 has proposed a method of charging a secondary battery: using a secondary battery having a positive electrode current collecting foil, a positive electrode active material layer, a solid electrolyte layer, and a negative electrode current collecting foil in this order, and using the deposition-dissolution reaction of a metal lithium in the negative electrode, wherein the secondary battery is charged with a multi-stage charging step: including at least a first charging step, in which charging is performed at a first electric current density I1 (mA/cm²) to deposit the metal lithium on the negative electrode current collecting foil side surface of the solid electrolyte layer and form a roughness cover layer of a part of the negative electrode active material layer and composed of the metal lithium; and a second charging step, in which after the first charging step, the secondary battery is charged at a second electric current density I2 larger than the first electric current density I1, to thicken the roughness cover layer thickness; in the first charging step, the secondary battery is charged at the first electric current density I1, until X/Y is 0.5 or more, setting the roughness height of the negative electrode current collecting foil side surface of the solid electrolyte layer as Y(µm), and the thickness of the roughness cover layer as X(µm).

### [Citation List]

### [Patent Literature]

PLT1: Japanese Laid-Open Patent Publication No. 2001-243957
PLT2: Japanese Laid-Open Patent Publication No. 2020-9724

### [Summary of Invention]

With a type of secondary battery in which lithium metal deposits in the negative electrode during charging and lithium metal dissolves into non-aqueous electrolytes during discharging, generally, it is difficult to control deposition form of lithium metal, and a technique to suppress dendrite generation is desired. The lithium metal deposited as dendrites during charging tends to isolate during discharging partly from the negative electrode conductive network. Therefore, along with repetitive charge/discharge, cycle characteristics are reduced.

By setting the electric current during charging to small, dendritic lithium metal deposition can be suppressed, but there are tendencies to increase side reactions between the lithium metal and non-aqueous electrolyte, and also the charging time becomes longer, reducing practicality of the battery.

In view of the above, an aspect of the present disclosure relates to a method of charging a secondary battery, the secondary battery including a positive electrode, a negative electrode including a negative electrode current collector, and a non-aqueous electrolyte, wherein during charging, lithium metal deposits in the negative electrode, during discharging, the lithium metal dissolves in the non-aqueous electrolyte, the method including: a step of charging the secondary battery based on any of a first charging profile and a second charging profile, wherein the first charging profile includes at least two charging steps, the second charging profile includes more charging steps than the first charging profile, at a starting point of the step of charging the secondary battery, the first charging profile is selected when the secondary battery has a depth of discharge of less than a predetermined threshold, and the second charging profile is selected when the secondary battery has a depth of discharge of the threshold or more.

Another aspect of the present disclosure relates to a secondary battery charging system comprising: a secondary battery, a DOD detector that detects a depth of discharge of the secondary battery, and a charging control unit that controls charging of the secondary battery, wherein the secondary battery includes a positive electrode, a negative electrode including a negative electrode current collector, and a non-aqueous electrolyte, and during charging, the lithium metal deposits in the negative electrode, during discharging, the lithium metal dissolves in the non-aqueous electrolyte, the DOD detector measures a depth of discharge of the secondary battery before a start of charging of the secondary battery, the charging control unit controls charging of the secondary battery based on any of a first charging profile and a second charging profile, the first charging profile includes at least two charging steps, the second charging profile includes more charging steps than the first charging profile, and the first charging profile is selected when the depth of discharge is less than a predetermined threshold, and the second charging profile is selected when the depth of discharge is the threshold or more.

With the present disclosure, an excellent balance between charging time and cycle characteristics of a secondary battery can be achieved.

### [Brief Description of Drawings]

[FIG. 1] FIG. 1 is a flow diagram of a method of charging a secondary battery in an embodiment of the present disclosure.
[FIG. 2] FIG. 2 is a schematic diagram of a charging system of a secondary battery in an embodiment of the present disclosure.
[FIG. 3] FIG. 3 is a partially cutaway oblique perspective view of a secondary battery used for the charging method and charging system in an embodiment of the present disclosure.

### [Description of Embodiments]

Embodiments of the charging method and charging system of the present disclosure are described below with examples. However, the present disclosure is not limited to the examples below. In the description below, specific numeral values and materials are given as examples, but other numeral values and materials can be used as long as effects of the present disclosure can be achieved. Hereinafter, examples of the charging method and charging system of present disclosure will be described with reference to the drawings.

In the following, the depth of discharge (DOD) means a ratio of the amount of discharged electricity relative to the amount of electricity the battery has in a fully charged state. In contrast, the state of charge (SOC) means a ratio of the amount of remaining electricity in the battery relative to the amount of electricity the battery has in a fully charged state. The rated capacity is the amount of charged electricity (that is, fully charged amount) when a battery in a completely discharged state (SOC = 0%, DOD = 100%) is charged until a fully charged state (SOC = 100%, DOD = 0%). The voltage of the battery in a fully charged state is a charging termination voltage. The voltage of the battery in a completely discharged state is a discharging termination voltage. However, when a battery rated capacity is set to C, the battery can be regarded as being in a fully charged state when, for example, it is charged to a state of charge (SOC = 98%) of 0.98 × C or more.

The electric current density (mA/cm²) is a charge density per unit facing area (1 cm²) of the positive electrode and negative electrode, and is determined by dividing the electric current value applied to the battery by a total area (hereinafter, referred to as effective total area of positive electrode) of the positive electrode mixture layer (or positive electrode active material layer) facing the negative electrode. The effective total area of the positive electrode is, for example, when the positive electrode has a positive electrode mixture layer on both sides of the positive electrode current collector, a total area of the both positive electrode mixture layers (that is, a total projection area of each of the positive electrode mixture layers to one and the other surfaces of the positive electrode current collector).

The secondary battery to be charged by the charging method of the present disclosure includes a positive electrode, a negative electrode including a negative electrode current collector, and a non-aqueous electrolyte, and lithium metal deposits in the negative electrode during charging, and lithium metal dissolves into non-aqueous electrolytes during discharging. That is, the secondary battery is, without limitation, mainly, a lithium (metal) secondary battery.

In lithium secondary batteries, for example, 70% or more of the rated capacity is brought out by deposition and dissolution of lithium metal. The electron migration in the negative electrode during charging and during discharging is due to deposition and dissolution of lithium metal mainly in the negative electrode. Specifically, 70 to 100% (e.g., 80 to 100% or 90 to 100%) of the electron migration(from a different point of view, electric current) during charging and during discharging in the negative electrode is due to deposition and dissolution of lithium metal. That is, the negative electrode of this embodiment is different from the negative electrode in which electron migration during charging and during discharging in the negative electrode is mainly due to storage and release of lithium ion mainly by a negative electrode active material (graphite, etc.).

### [Charging method of secondary battery]

It is important to control lithium metal deposition form in lithium secondary batteries to achieve excellent cycle characteristics. By setting the electric current during charging to small, the dendritic lithium metal deposition can be suppressed, but the charging time becomes long. To increase practicality of a secondary battery, it is desired to shorten the charging time and suppress dendritic lithium metal deposition.

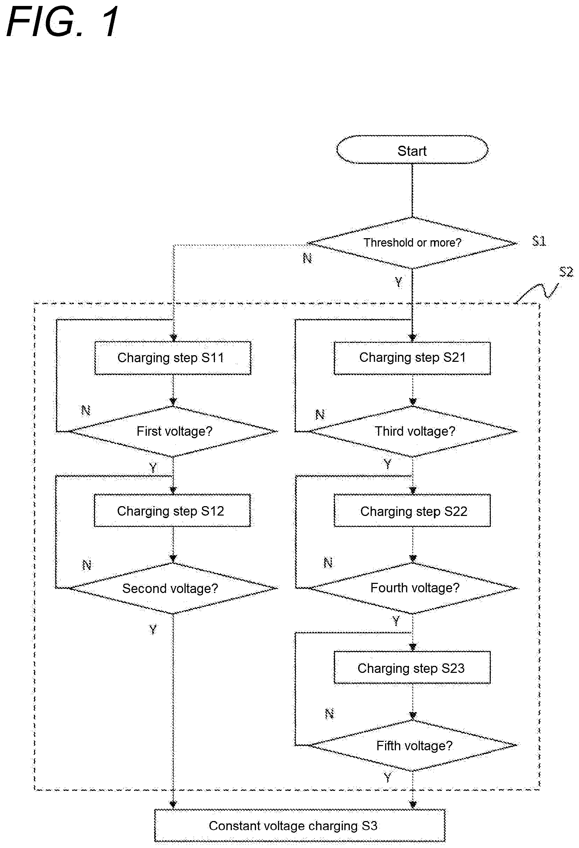

Thus, a charging method of the present disclosure has a step of charging a secondary battery based on any of a first charging profile and a second charging profile. FIG. 1 is a flow diagram illustrating an example of a method of charging of the present disclosure. The illustrated example of the charging method has a step (S1) of selecting, before a start of charging, any of a first charging profile and a second charging profile. Such a selection is performed based on the DOD before a starting point of the step of charging a secondary battery (hereinafter, also referred to as point T). In this manner, a small charging electric current can be used within a range necessary selectively during use period of a secondary battery in which charge/discharge is repeated, and time required for the charging can be shortened entirely.

To be specific, the first charging profile includes at least two charging steps, and the second charging profile includes charging steps of more than that of the first charging profile. That is, when the first charging profile includes n (≥2) charging steps, the second charging profile includes (n + m) charging steps. N is, for example, 2 to 5, may be 2 to 4 or 2 to 3, but n = 2 is efficient.

### "m" of 1 or more will suffice, but m = 1 or m = 2 is efficient.

Here, the charging profile is a recipe in which the conditions such as charging method, voltage, and electric current are specified when the secondary battery is charged. In other words, the charging profile specifies steps for a one-time schedule for a secondary battery to be charged to a fully charged state. The charging steps are steps by which the secondary battery is charged by different charging conditions. The charging conditions are regulated by a charging electric current and and/or a charging voltage. In each of the charging steps, the charging step may be performed with a constant current or a constant voltage.

In any of the first charging profile and second charging profile, the value of the charging electric current is small at first, and increases gradually. In the second charging profile including (n+ m) charging steps, the charging electric current increases by a shorter interval than that of the first charging profile. However, after going through the phase in which the charging electric current increases gradually from the start of charging, the charging electric current may decrease. Generally, in the step of charging a secondary battery, the battery is charged to a fully charged state (SOC 100%) based on the first profile or second profile.

At a starting point (point T) of the step of charging a secondary battery, when the secondary battery has a depth of discharge of less than the predetermined threshold, the first charging profile is selected, and when it is the threshold or more, the second charging profile is selected (S2). That is, at a point T, with a shallow DOD (Battery has high SOC), charging steps are fewer, and with a deep DOD (Battery has low SOC), charging steps are more. In the second charging profile, the charging electric current increases by smaller notches. That is, in the second charging profile, charging can start with a charging electric current smaller than the first charging profile. In the second charging profile, charging can be performed with a charging electric current greater than the first charging profile.

With a smaller charging electric current, lithium metal hardly deposits as dendrites, and lithium metal tends to deposit in a flat manner. With a large charging electric current, the charging time can be shortened. That is, the second charging profile contributes to improvement in cycle characteristics and/or shortening of the charging time. Meanwhile, with a shallow DOD, the negative electrode has a sufficient base layer of lithium metal, and therefore compared with the case where the DOD is deep, lithium metal hardly deposits as dendrites. That is, in the first charging profile, the charging electric current does not have to be increased in bit by bit in such short steps. Thus, more simple control (or more simple control circuit structure) can be used. When the first profile is selected, the charging electric current at a start of charging may be larger than the charging electric current at a start of charging in the second profile.

The DOD threshold that determines the selection between the first profile and the second profile may be, for example, 50% or more and 70% or less, or 55% or more and 70% or less. With a shallow depth of discharge of less than DOD 50% (that is, 50% or more SOC), a sufficient base layer for lithium metal deposition during charging is present, and therefore lithium metal does not easily isolate. In this case, the first profile is selected, in which a simple control or a speedy completion of charging as much as possible is prioritized. With a shallow DOD, there is no advantage in view of capacity retention rate by further increasing the number of the charging steps to charge with a large electric current at a terminal period of charging. Meanwhile, with a deep depth of discharge of a DOD of more than 80% (that is, SOC of less than 20%), the presence of the base layer to which lithium metal deposits during charging is insufficient, and dendritic growth of lithium metal is highly likely. In this case, the second profile is selected to prioritize careful progression of charging. Alternatively, the second profile including more charging steps is selected to perform charging with a large electric current as it approaches a terminal period of charging, to shorten the charging time.

The first charging profile includes, for example, a charging step S11 at a first electric current density I1, and a subsequent charging step S12 at a second electric current density I2 higher than the first electric current density I1 (I1 < I2).

The second charging profile includes, for example, a charging step S21 at a third electric current density I3, and a subsequent charging step S22 at a fourth electric current density I4 higher than the third electric current density I3 (I3 < I4).

The second charging profile has more charging steps than the first charging profile, and has at least a charging step S23 subsequent to the charging step S22 at a fifth electric current density I5. The fifth electric current density I5 of the charging step S23 subsequent to the charging step S22 preferably is higher than the fourth electric current density I4 (I4 < I5).

The charging step S11 is set, for example, as a first charging step in the first profile. The charging step S21 is set, for example, as a first charging step in the second profile. The charging step S11 and charging step S12 in the first profile both can be a constant current charging step. The charging step S21, charging step S22, and charging step S23 in the second profile may all be a constant current charging step.

The third electric current density I3 may be smaller than the first electric current density I1 (I3 < I1). The second charging profile is selected when the DOD is deep, and therefore charging is preferably started with a small electric current. I3/I1 is not particularly limited, and for example, may be 0.2 to 1, or 0.5 to 1.

When I1 is closer to I2 (I1/I2 is near 1), the charging time of charging the secondary battery with the first profile can be shortened. Meanwhile, with a large I4 relative to I3 (small I3/I4), lithium metal dendrites hardly grow. Thus, I1/I2> I3/I4 is preferably satisfied.

I1/I2 may be, for example, 0.6 or more, 0.7 or more, or 0.75 or more (or further 0.8 or more). However, when I1/I2 is too close to 1, during charging of the charging step S11, possibility for isolation of lithium metal gradually increases, and therefore I1/I2 is preferably 0.9 or less.

The amount of charged electricity Q1 of the charging step S11, amount of charged electricity Q2 of the charging step S12, amount of charged electricity Q3 of the charging step S21, and amount of charged electricity Q4 of the charging step S22 may satisfy Q1/Q2 < Q3/Q4. With a large Q2 relative to Q1 (small Q1/Q2), the charging time when the secondary battery is charged with the first profile is shortened. With a large Q4 relative to Q3 (small Q3/Q4), the charging time when the secondary battery is charged with the second profile is shortened. However, in view of shortening the charging time, Q2 < Q4 is preferable, and Q1/Q2 < Q3/Q4 is preferable.

In the first charging profile, the first electric current density I1 is, for example, 3.0 mA/cm² or less, and the second electric current density I2 may be 4.0 mA/cm² or more.

The first electric current density I1 is, in view of balance between the charging time and cycle characteristics, preferably 1.0 mA/cm² or more, and may be 2.0 mA/cm² or more.

The second electric current density I2 is preferably 4.0 mA/cm² or more, and may be 6.0 mA/cm² or more. However, with a second electric current density I2 too high, possibility for isolation of lithium metal gradually increases during charging, and therefore I2 is preferably 8.0 mA/cm² or less.

I1/I2 may be, for example, 0.1 or more and 0.8 or less, or 0.4 or more and 0.7 or less.

The amount of charged electricity (Q1) in the charging step S11 may be 5% or more and 15% or less of a total amount of charged electricity in the step of charging a secondary battery. Here, [total amount of charged electricity in the step of charging a secondary battery] means an amount of charged electricity from the start of charging until the secondary battery is in a fully charged state, and changes depending on the DOD or SOC of the secondary battery at the start of charging. In the following, [total amount of charged electricity] charged based on the first profile is also referred to as a total amount of charged electricity P1. When Q1 is 5% or more of the total amount of charged electricity P1, the effect of suppressing the dendritic lithium metal growth increases. When Q1 is 15% or less of the total amount of charged electricity, effects of shortening the charging time and suppressing the dendritic lithium metal growth can be obtained sufficiently.

In the second charging profile, the third electric current density I3 is, for example, 1 mA/cm² or less, and the fourth electric current density I4 is larger than the third electric current density, and 4 mA/cm² or less, and the fifth electric current density I5 may be larger than the second electric current density, and 4 mA/cm² or more.

The third electric current density I3 may be, in view of balance between the charging time and cycle characteristics, preferably 0.1 mA/cm² or more, or may be 0.5 mA/cm² or more.

The fourth electric current density I4 may be preferably 1.0 mA/cm² or more, or may be 2.0 mA/cm² or more. However, with the fourth electric current density I4 too high, possibility for isolation of lithium metal during charging gradually increases, and thus I4 is preferably 4.0 mA/cm² or less.

The fifth electric current density I5 may be preferably 6.0 mA/cm² or more, or may be 8.0 mA/cm² or more. However, when the fifth electric current density I5 is too high, possibility for isolation of lithium metal gradually increases during charging, and therefore I5 is preferably 10.0 mA/cm² or less.

I3/I4 may be, for example, 0.1 or more and 0.5 or less, or 0.2 or more and 0.4 or less.

I4/I5 may be, for example, 0.2 or more and 0.9 or less, or 0.3 or more and 0.7 or less.

In the charging step S21 at a small third electric current density I3 (initial charging period), lithium metal deposits in the negative electrode current collector in blocks (particles), and an excellent base layer of lithium metal is easily formed. Thus, even when the fourth electric current density I4 of the subsequent charging step S22 is set to be larger than the third electric current density I3, the dendritic lithium metal does not easily grow. Also, the base layer of lithium metal further grows in the charging step S22, and therefore even when the electric current density I5 of the subsequent to charging step S23 is set to be larger than I4 (I4 < I5), dendritic lithium metal growth is suppressed. In this manner, the charging time can be significantly shortened.

The amount of charged electricity (Q3) in the charging step S21 may be 5% or more and 15% or less of a total amount of charged electricity in the step of charging a secondary battery. In the following, [total amount of charged electricity] charged based on the second profile is also referred to as a total amount of charged electricity P2. When Q3 is 5% or more of the total amount of charged electricity P2, the effect of suppressing the dendritic lithium metal growth is more significant. When Q3 is 15% or less of the total amount of charged electricity P2, effects of shortening the charging time and suppressing the dendritic lithium metal growth can be obtained sufficiently.

The total amount of charged electricity in the charging step S21 and the charging step S22 may be 50% or less, or 40% or less of the total amount of charged electricity P2. In this case, dendritic lithium metal growth can be sufficiently suppressed, and the charging time can be significantly shortened. The remaining 50% or more of the total amount of charged electricity P2 is charged in the charging step S23 at a higher electric current density I5.

The timing at which each of the charging steps can be terminated can be controlled, for example, based on the charging time, amount of charged electricity, voltage, and the like; a ratio of the amount of the electricity charged relative to the total amount of charged electricity P1 and P2 in each of the charging steps; or the SOC or charge rate. The SOC can be assumed based on a voltage. For example, the SOC is assumed based on the voltage, and a charging termination voltage may be set in each of the charging steps.

For example, in the charging based on the first profile, when the battery voltage reached a first voltage in the charging step S11 at a first electric current density I1, the charging at the first electric current density I1 is terminated and the charging step S12 at a second electric current density I2 is started. Then, when the battery voltage reached a second voltage in the charging step S12 at a second electric current density I2, the charging at the second electric current density I2 is terminated. The first voltage is, for example, a voltage at which 15% or less of the total amount of charged electricity P1 is charged, and the second voltage is, for example, a voltage at which 90% or more of the total amount of charged electricity P1 is charged in total.

Also, for example, in the charging based on the second profile, when the battery voltage reached a third voltage in the charging step S21 at a third electric current density I3, the charging step S21 at the third electric current density I3 is terminated and the charging step S22 at a fourth electric current density I4 is started. Then, when the battery voltage reached a fourth voltage at the fourth electric current density I4, the charging step S22 at the fourth electric current density I4 is terminated and the charging step S23 at a fifth electric current density I5 is started. Then, when the battery voltage reached a fifth voltage in the charging step at the fifth electric current density I5, the charging at the fifth electric current density I5 is terminated. The third voltage is, for example, a voltage at which 15% or less of the total amount of charged electricity P2 is charged, and the fourth voltage is, for example, a voltage at which 50% or less of the total amount of charged electricity P1 is charged in total, the fifth voltage is, for example, a voltage at which 90% or more of the total amount of charged electricity P1 is charged in total.

To perform the charging more reliably, subsequent to the charging step at the constant current, a constant voltage charging step S3 may be performed. Such a charging step is performed, for example, until the electric current reaches a predetermined value. For example, after performing the final charging step with a constant current until a predetermined charging termination voltage, a charging step may be performed with a constant voltage of the voltage. Afterwards, discharging is performed to a limit of a predetermined discharging termination voltage.

### [Secondary battery charging system]

A charging system of the present disclosure includes a secondary battery, a DOD detector that detects the depth of discharge of the secondary battery, and a charging control unit that controls charging of the secondary battery. The secondary battery includes a positive electrode, a negative electrode including a negative electrode current collector, and a non-aqueous electrolyte, wherein lithium metal deposits in the negative electrode during charging, and lithium metal dissolves into non-aqueous electrolytes during discharging. The depth of discharge detector measures a depth of discharge of a secondary battery before a start of charging of the secondary battery. The charging control unit controls charging of the secondary battery based on any of the described first charging profile and second charging profile. When the depth of discharge detector detected the depth of discharge (DOD) of the secondary battery before a start of charging to be less than the predetermined threshold, the first charging profile is selected, and when the DOD is the threshold or more, the second charging profile is selected.

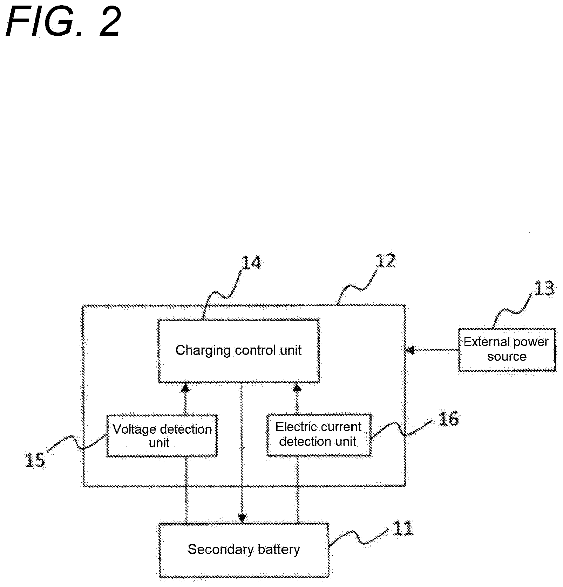

FIG. 2 shows an example of a charging system in an embodiment. The charging system includes a secondary battery 11 and a charging device 12. To the charging device 12, an external power source 13 that supplies electric power to the charging device 12 is connected. The charging device 12 includes a charging control unit 14 including a charging circuit. The charging control unit 14 controls charging of the secondary battery based on the selected charging profile.

The charging device 12 includes, as a DOD detector that detects the DOD of the secondary battery, a voltage detection unit 15 that detects the voltage of the secondary battery 11. The voltage detection unit 15 includes an operation unit that detects the voltage of the secondary battery 11 before a start of charging the secondary battery, and calculates the DOD based on the detected voltage. Based on the DOD determined by the operation unit, the charging control unit 14 selects any of the first profile and second profile. Then, charging of the secondary battery is controlled based on the selected charging profile.

The charging device 12 includes an electric current detection unit 16 that detects an electric current output from the secondary battery. The charging control unit 14 controls the charging electric current so that the electric current value detected by the electric current detection unit 16 does not greatly deviate from the predetermined value.

In FIG. 2, changing of the charging step and termination timing are controlled based on the voltage (or DOD(or SOC)) detected by the voltage detection unit 15, but the control method is not limited. For example, at least a part of the control can be performed based on charging time, amount of charged electricity, etc.

Next, description is given below of further details of the secondary battery.

### [Negative Electrode]

The negative electrode includes a negative electrode current collector. In lithium secondary batteries, lithium metal deposits on the negative electrode surface by charging. More specifically, lithium ion included in the non-aqueous electrolyte receives electrons on the negative electrode by charging to be lithium metal, and deposits on the negative electrode surface. The lithium metal deposited on the negative electrode surface dissolves as lithium ion in the non-aqueous electrolyte by discharging. The lithium ion included in the non-aqueous electrolyte may be derived from the lithium salt added to the non-aqueous electrolyte, or may be supplied from the positive electrode active material by charging, or both.

The negative electrode may include a negative electrode current collector, and a sheet form lithium metal closely attached to a surface of the negative electrode current collector, and further may include a lithium ion storage layer (layer that exhibits capacity by storage and release of lithium ion by negative electrode active material (graphite, etc.)) supported on the negative electrode current collector. In this case, the negative electrode open circuit potential at full charge may be 70 mV or less relative to lithium metal (dissolution deposition potential of lithium). When the negative electrode open circuit potential at full charge is 70 mV or less relative to lithium metal, lithium metal is present at the lithium ion storage layer surface at full charge. That is, the negative electrode exhibits a capacity based on deposition and dissolution of lithium metal.

The full charge means a state in which a battery is charged until a charging state of, for example, 0.98 × C or more (SOC = 98% or more), setting a battery rated capacity as C. The OCV of the negative electrode in a fully charged state may be measured by decomposing the battery in the fully charged state in an argon atmosphere to take out the negative electrode, and assembling a cell using lithium metal as a counter electrode. The non-aqueous electrolyte of the cell may be the same composition as the non-aqueous electrolyte of the decomposed battery.

The lithium ion storage layer is formed with a negative electrode mixture including a negative electrode active material into a layer. The negative electrode mixture may include, other than the negative electrode active material, a binder, thickener, conductive agent, etc.

Examples of the negative electrode active material include a carbon material, a Si-containing material, and a Sn-containing material. The negative electrode may include one kind of negative electrode active material, or two or more kinds can be used in combination. Examples of the carbon material include graphite, graphitizable carbon (soft carbon), and non-graphitizable carbon (hard carbon).

The conductive agent is, for example, a carbon material. Examples of the carbon material include carbon black, acetylene black, Ketjen Black, carbon nanotube, and graphite.

Examples of the binder include fluorine resin, polyacrylonitrile, polyimide resin, acrylic resin, polyolefin resin, and rubber polymer. Examples of the fluorine resin include polytetrafluoroethylene and polyvinylidene fluoride.

The negative electrode current collector may be an electrically conductive sheet. Examples of the electrically conductive sheet include foil and film. The thickness of the negative electrode current collector is not particularly limited, and is, for example, 5 µm or more and 300 µm or less.

For the material of the negative electrode current collector (electrically conductive sheet), a conductive material other than lithium metal and lithium alloy may be used. The conductive material may be a metal material such as a metal and an alloy. Preferably, the conductive material is a material that does not react with lithium. Preferably, more specifically, a material that does not form an alloy or intermetallic compound with lithium is used. For such a conductive material, for example, copper (Cu), nickel (Ni), iron (Fe), and an alloy including these metal elements, or a graphite with its basal plane exposed with priority is used. Examples of the alloy include copper alloy and stainless steel (SUS). Preferably, copper and/or a copper alloy having a high electrical conductivity among these is used. The negative electrode current collector may be copper foil or a copper alloy foil.

### [Positive Electrode]

The positive electrode includes, for example, a positive electrode current collector, and a positive electrode mixture layer supported on the positive electrode current collector. The positive electrode mixture layer includes, for example, a positive electrode active material, conductive agent, and binder. The positive electrode mixture layer may be formed on one side of the positive electrode current collector, or both sides. The positive electrode is produced by, for example, applying a positive electrode mixture slurry containing a positive electrode active material, conductive agent, and binder onto both sides of the positive electrode current collector, drying the applied coating, and then rolling.

The positive electrode active material is a material that stores and releases lithium ions. Examples of the positive electrode active material include a composite oxide including lithium and metal Me other than lithium (e.g., lithium-containing transition metal oxide including at least transition metal as metal Me), fluorinated transition metal, polyanion, fluorinated polyanion, and sulfide of transition metals. In particular, in view of less production costs and high average discharge voltage, a lithium-containing transition metal oxide is preferable. In particular, those having a layered rock salt type crystal structure is preferable.

Lithium included in the lithium-containing transition metal oxide is released during charging as lithium ion from the positive electrode, and deposits on the negative electrode or negative electrode current collector as lithium metal. During discharging, lithium metal dissolves from the negative electrode and releases lithium ion, and is stored in the composite oxide of the positive electrode. That is, the lithium ion involved with charge/discharge is generally derived from the solute in the non-aqueous electrolyte and positive electrode active material. In this case, the molar ratio of a total amount of Li included in the positive electrode and negative electrode, mLi, relative to the amount of the metal Me included in the lithium-containing transition metal oxide, mMe: mLi/mMe is, for example, 1.2 or less.

Examples of the transition metal element included in the lithium-containing transition metal oxide include Sc, Ti, V, Cr, Mn, Fe, Co, Ni, Cu, Y, Zr, and W. The lithium-containing transition metal oxide may include a single type of transition metal element, or two or more types may be included. The transition metal element may be Co, Ni and/or Mn. The lithium-containing transition metal oxide may include, as necessary, one or more main group elements. Examples of the main group element include Mg, Al, Ca, Zn, Ga, Ge, Sn, Sb, Pb, and Bi. The main group element may be Al and the like.

Preferably, for the transition metal element in the lithium-containing transition metal oxide, in particular, a composite oxide having a rock salt type crystal structure including Co, Ni and/or Mn, and may include Al as an optional component, and having a layer structure is used in terms of obtaining a high capacity. Preferably, for the transition metal, a lithium-containing transition metal oxide including at least Ni is used, in terms of a particularly high capacity. In this case, in the lithium secondary battery, the molar ratio of the total amount of lithium included in the positive electrode and negative electrode, mLi, to the amount of metal M other than lithium included in the positive electrode, mM: mLi/mM may be set to, for example, 1.1 or less.

The lithium-containing transition metal oxide is represented by, for example, a general formula (1): LiₐNi_{b}M_{1-b}O₂. In the general formula (1), for example, m0.9 ≤ a ≤ 1.2 and 0.65 ≤ b ≤ 1 are satisfied. M may be, for example, at least one element selected from the group consisting of Co, Mn, Al, Ti, Fe, Nb, B, Mg, Ca, Sr, Zr, and W.

For the binder and conductive agent, for example, those exemplified for the negative electrode may be used. The shape and thickness of the positive electrode current collector can be selected from the shapes and ranges according to the positive electrode current collector.

Examples of the positive electrode current collector (electrically conductive sheet) material include a metal material including Al, Ti, Fe, etc. The metal material may be Al, Al alloy, Ti, Ti alloy, Fe alloy, etc. The Fe alloy may be stainless steel (SUS).

### [Separator]

For the separator, a porous sheet having ion permeability and insulating properties is used. Examples of the porous sheet include microporous thin film, woven cloth, nonwoven cloth, and the like. The separator material is not particularly limited, and a polymer material may be used. Examples of the polymer material include olefin resin, polyamide resin, cellulose, etc. Examples of the olefin resin include polyethylene, polypropylene, and a copolymer of ethylene and propylene. The separator may include, as necessary, an additive. Examples of the additive include an inorganic filler.

Preferably, the thickness of the separator is, without particular limitation, for example, 5 µm or more and 20 µm or less, or more preferably 10 µm or more and 20 µm or less.

### [Non-aqueous electrolyte]

The non-aqueous electrolyte having lithium ion conductivity includes, for example, a non-aqueous solvent, and lithium ion and anion dissolved in the non-aqueous solvent. The non-aqueous electrolyte may be liquid or gel.

The liquid non-aqueous electrolyte is prepared by dissolving a lithium salt in a non-aqueous solvent. By dissolving the lithium salt in a non-aqueous solvent, lithium ions and anions are generated.

The gel non-aqueous electrolyte includes a lithium salt and a matrix polymer, or includes a lithium salt, non-aqueous solvent, and matrix polymer. As the matrix polymer, for example, a polymer material which absorbs and gels the non-aqueous solvent is used. Examples of the polymer material include fluororesin, acrylic resin, and polyether resin.

As the anion, for example, a known one used in the non-aqueous electrolyte of lithium secondary batteries can be used. Specific examples thereof include anions of BF₄-, ClO₄-, PF₆-, CF₃SO₃-, CF₃CO₂-, and imides, and anions of oxalate complexes. Examples of the anions of the imides include N(SO₂CF₃)₂-, N(CₘF₂ₘ₊₁SO₂)ₓ (CₙF₂ₙ₊₁SO₂)y⁻(m and n are each independently an integer of 0 or 1 or more, and x and y are each independently 0, 1 or 2, and x + y = 2 is satisfied). The anion of the oxalate complex may contain boron and/or phosphorus. Examples of the anion of the oxalate complex include bis oxalateborate anion, difluorooxalateborate anion (BF₂(C₂O₄) -), PF₄(C₂O₄) -, and PF₂(C₂O₄) 2-. The non-aqueous electrolyte may contain one kind of anions, and may contain two or more kinds thereof.

In view of suppressing the deposition of lithium metal dendrites, the non-aqueous electrolyte preferably includes at least an anion of the oxalate complex, and in particular, includes an oxalate complex anion having fluorine (particularly difluorooxalateborate anion). Due to the interaction between the anion of the oxalate complex having fluorine and lithium, the lithium metal is easily deposited in a fine particulate form uniformly. Therefore, partial deposition of lithium metal can be easily suppressed. Anions of the oxalate complex having fluorine and other anions may be combined. Other anions may be anions of PF₆- and/or imides.

Examples of the non-aqueous solvent include ester, ether, nitrile, amide, or halogen substituted products thereof. The non-aqueous electrolyte may include one kind of non-aqueous solvent, and may contain two or more kinds thereof. Examples of the halogen substituted product include fluoride.

The non-aqueous electrolyte has a lithium salt concentration of, for example, 0.5 mol/L or more and 3.5 mol/L or less. The non-aqueous electrolyte may have an anion concentration of 0.5 mol/L or more and 3.5 mol/L or less. The non-aqueous electrolyte may have an oxalate complex anion concentration of 0.05 mol/L or more and 1 mol/L or less.

The structure of the lithium secondary battery can be, for example, a structure in which an electrode group formed by winding a positive electrode and a negative electrode with a separator interposed therebetween and a non-aqueous electrolyte are accommodated in an outer case. However, the structure is not limited thereto, and other forms of electrode group may be used. For example, a laminate electrode group, in which the positive electrode and negative electrode are laminated with a separator interposed therebetween, may be used. The shape of the lithium secondary battery is not limited as well, and for example, a cylindrical, prism-shaped, coin-shaped, button-shaped, and laminate type may be used.

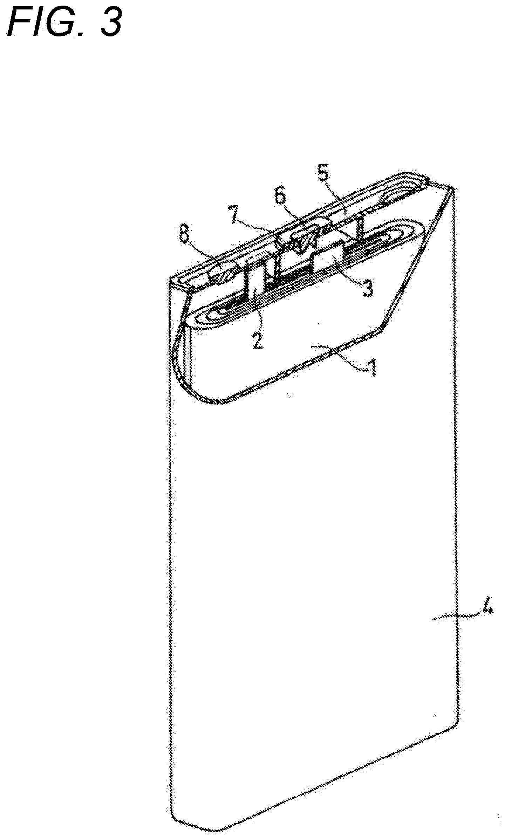

FIG. 3 is a partially cutaway oblique perspective view of a prism lithium secondary battery in an embodiment of the present disclosure. The battery includes a bottomed prismatic battery case 4, an electrode group 1 housed in the battery case 4, and an electrolyte. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 with a negative electrode lead 3. The negative electrode terminal 6 is insulated from the sealing plate 5 by a gasket 7 made of a resin. The positive electrode current collector of the positive electrode is electrically connected to the back surface of the sealing plate 5 via a positive electrode lead 2. That is, the positive electrode is electrically connected to the battery case 4 also working as a positive electrode terminal. The periphery of the sealing plate 5 is fitted to the open end of the battery case 4, and the fitting portion is laser welded. The sealing plate 5 has an injection port for the electrolyte, and is plugged with a sealing plug 8 after injection.

### [Examples]

In the following, the present disclosure will be described in detail based on Examples, but the present invention is not limited to Examples below.

### <Example 1>

### [Positive Electrode Production]

Lithium nickel composite oxide (LiNi_{0.9}Co_{0.05}Al_{0.05}O₂), acetylene black, and polyvinylidene fluoride (PVdF) were mixed at a mass ratio of 95:2.5:2.5, and N-methyl-2-pyrrolidone (NMP) was added: the mixture was stirred to prepare a positive electrode slurry. Then, the positive electrode slurry was applied to a surface of Al foil as a positive electrode current collector, the film was dried and then rolled, to produce a positive electrode in which a positive electrode mixture layer (density 3.6 g/cm³) was formed on both sides of the Al foil.

### [Negative Electrode Production]

Electrolytic copper foil (thickness 10 µm) was cut into a predetermined electrode size, to produce a negative electrode current collector.

### [Non-aqueous Electrolyte Preparation]

A lithium salt was dissolved in a solvent mixture, thereby preparing a non-aqueous electrolyte. Fluoro ethylene carbonate (FEC), ethyl methyl carbonate (EMC), and dimethyl carbonate (DMC) were mixed at a volume ratio of FEC: EMC: DMC = 20:5:75, and used for the solvent mixture. LiPF₆, LiN(FSO₂)₂ (hereinafter, referred to as LiFSI), and LiBF₂(C₂O₄) (hereinafter, referred to as LiFOB) were used for the lithium salt. The non-aqueous electrolyte had a LiPF₆ concentration of 0.5 mol/L, and a LiFSI concentration of 0.5 mol/L. The non-aqueous electrolyte had a LiFOB content of 1 mass%.

### [Battery assembly]

An Al-made positive electrode lead was attached to the above-described positive electrode, and a Ni-made negative electrode lead was attached to the above-described negative electrode. The positive electrode and the negative electrode were wound with a polyethylene thin film (separator) interposed therebetween into a spiral shape in an inert gas atmosphere, thereby producing a wound-type electrode group. The electrode group was accommodated in a bag-type outer package formed of a laminate sheet including an Al layer, the above-described non-aqueous electrolyte was injected, and then the outer package was sealed, thereby producing a non-aqueous electrolyte secondary battery. Upon accommodating the electrode group in the outer package, a portion of the positive electrode lead and a portion of the negative electrode lead were allowed to be exposed to the outside of the outer package.

All the lithium was derived from the non-aqueous electrolyte and positive electrode, and therefore the molar ratio of a total amount of lithium included in the positive electrode and negative electrode, mLi, relative to the amount of metal Me included in the positive electrode (here, Ni, Co, and Al), mMe: mLi/mMe was 1.0. The voltage at SOC100% was 4.1 V, and the voltage at DOD100% was 3.0 V.

### [Preliminary charge and discharge]

Using the produced battery (rated capacity 100 mAh), under a 25°C environment, the following preliminary charge/discharge were performed. The electric current value (1/X) C represents an electric current value when an amount of electricity corresponding to rated capacity C is charged or discharged at a constant current by time X. For example, 0.1C is an electric current value when the amount of electricity corresponding to rated capacity C is charged or discharged by 10 hours at a constant current.

### (Preliminary charge)

A constant current charging was performed until the voltage reached 4.1 V (SOC100%) with an electric current I₀ of 0.05C (electric current density 0.5 mA/cm²).

### (Preliminary discharge)

After 10 minutes rest, a constant current discharging was performed until the voltage reached 3.75 V at 0.6C (electric current density 6.0 mA/cm²).

### [Charge and Discharge Cycle Test]

Using the battery after the preliminary charge/discharge, a charge/discharge cycle test was performed under a 25°C environment, including charging with the first profile and second profile below.

### <First profile>

(1) DOD at start of charging: 52% (voltage 3.75 V)
(2) First charging step S11
   First electric current density I1: 1 mA/cm² or 3 mA/cm²
   Amount of charged electricity Q1: 15% of total amount of charged electricity P1
(3) Charging step S12 subsequent to S11
   Second electric current density I2: 4 mA/cm²
   Amount of charged electricity Q2: remaining portion (85%) of total amount of charged electricity P1
   Charging termination voltage: 4.1 V
(4) Constant voltage charging subsequent to S21
   Constant voltage charging at 4.1 V until the electric current reached 0.02 C (electric current density 0.2 mA/cm²)
(5) After 10 minutes rest, constant current discharging at 0.6 C (electric current density 6.0 mA/cm²) until the voltage reached 3.75 V
   Based on the above, I1/I2 = 1/4, Q1/Q2 = 15/85.

### <Second profile>

(1) DOD at start of charging: 80% (voltage 3.55 V)
(2) First charging step S21
   Third electric current density I3: 1 mA/cm²
   Amount of charged electricity Q3: 15% of total amount of charged electricity P2
(3) Charging step S22 subsequent to S21
   Fourth electric current density I4: 4 mA/cm²
   Amount of charged electricity Q4: 35% of total amount of charged electricity P1 (Q3+ Q4 = 50%)
(4) Charging step S23 subsequent to S22
   Fifth electric current density I5: 8 mA/cm²
   Amount of charged electricity Q5: remaining portion (50%) of total amount of charged electricity P1 (Q3+ Q4+ Q5 = 100%)
(5) Constant voltage charging subsequent to S23
   Constant voltage charging at 4.1 V until the electric current reached 0.02 C (electric current density 0.2 mA/cm²)
(6) Discharge
   After 10 minutes rest, constant current discharging at 0.6 C (electric current density 6.0 mA/cm²) until the voltage reached 3.55 V
   Based on the above, I3/I4 = 1/4, I4/I5 = 4/8, Q3/Q4 = 15/35.

Table 1 shows the time it took to a fully charged state with the charging based on the first profile and second profile. Table 2 shows the capacity retention rate after 60 cycles.

**[Table 1]**

| DOD | No. of charging steps | I1 (mA/cm²) | Q1 (%) | I2 (mA/cm²) | Q1+Q2 (%) | - | Charging time (h) | Capacity retention rate (%) |
|---|---|---|---|---|---|---|---|---|
| 52% | 2 | 1 | 15 | 4 | 100 | - | 1.82 | 96.0 |
| 52% | 2 | 3 | 15 | 4 | 100 | - | 1.46 | 95.5 |

| DOD | No. of charging steps | I3 (mA/cm²) | Q3 (%) | I4 (mA/cm²) | Q3+Q4 (%) | I5 (mA/cm²) | Charging time (h) | Capacity retention rate (%) |
|---|---|---|---|---|---|---|---|---|
| 80% | 3 | 1 | 15 | 4 | 50 | 8 | 2.72 | 73.7 |

### <Comparative Example 1>

Next, in contrast with Example 1, using the battery after the preliminary charge/discharge, a charge/discharge cycle test was performed, in which charging is performed under a 25°C environment with the first profile, setting DOD at the time of charging start as 80%, and with the second profile, setting DOD at the time of charging start as 52%.

### <First profile>

(1) DOD at start of charging: 80% (voltage 3.55 V)
(2) First charging step S21
   First electric current density I1: 1 mA/cm²
   Amount of charged electricity Q1: 15% of total amount of charged electricity P1
(3) Charging step S12 subsequent to S11
   Second electric current density I2: 4 mA/cm²
   Amount of charged electricity Q2: remaining portion (85%) of total amount of charged electricity P1
   Charging termination voltage: 4.1 V
(4) Constant voltage charging subsequent to S12
   Constant voltage charging at 4.1 V until the electric current reached 0.02 C (electric current density 0.2 mA/cm²)
(5) Discharge
   After 10 minutes rest, constant current discharging at 0.6 C (electric current density 6.0 mA/cm²) until the voltage reached 3.75 V

### <Second profile>

(1) DOD at start of charging: 52% (voltage 3.75 V)
(2) First charging step S21
   Third electric current density I3: 1 mA/cm²
   Amount of charged electricity Q3: 15% of total amount of charged electricity P2
(3) Charging step S22 subsequent to S21
   Fourth electric current density I4: 4 mA/cm²
   Amount of charged electricity Q4: 35% of total amount of charged electricity P2 (Q3+ Q4 = 50%)
(4) Charging step S23 subsequent to S22
   Fifth electric current density I5: 8 mA/cm²
   Amount of charged electricity Q5: remaining portion (50%) of total amount of charged electricity P2 (Q3+ Q4+ Q5 = 100%)
(5) Constant voltage charge subsequent to S23
   Constant voltage charging at 4.1 V until the electric current reached 0.02 C (electric current density 0.2 mA/cm²)
(6) Discharge
   After 10 minutes rest, constant current discharging at 0.6 C (electric current density 6.0 mA/cm²) until the voltage reached 3.55 V

Table 2 shows the time it took to a fully charged state with the charge based on the first profile and second profile. Table 2 shows the capacity retention rate after 60 cycles.

**Table 2**

| DOD | No. of charging steps | I1 (mA/cm²) | Q1 (%) | I2 (mA/cm²) | Q1+Q2 (%) | - | Charging time (h) | Capacity retention rate (%) |
|---|---|---|---|---|---|---|---|---|
| 80% | 2 | 1 | 15 | 4 | 100 | - | 3.04 | 75.9 |

| DOD | No. of charging steps | I3 (mA/cm²) | Q3 (%) | I4 (mA/cm²) | Q4+Q5 (%) | I5 (mA/cm²) | Charging time (h) | Capacity retention rate (%) |
|---|---|---|---|---|---|---|---|---|
| 52% | 3 | 1 | 15 | 4 | 50 | 8 | 1.80 | 93.8 |

Comparison between Tables 1 and 2 shows that when the DOD at the time of charging start is shallow (DOD = 52%), there is generally no advantage in using the second profile in view of shortening charging time. That is, even if the charging step S23 at a higher fifth electric current density I5 is incorporated using the second profile, compared with the case where the first profile is used, the charging time is only shortened from 1.82 hours to 1.80 hours, just 0.02 hours. In this case, the first charging profile with simpler control is sufficient. Meanwhile, when the DOD at the time of charging start is shallow (DOD = 52%), by using the first profile and increasing the first electric current density I1, not only the charging time can be greatly shortened from 1.82 hours to 1.46 hours, the capacity retention rate can be kept high.

When the second profile is selected with a shallow DOD at the time of charging start (DOD = 52%), the capacity retention rate tends to decrease to some extent (96.0% →93.8%). This is probably because metal lithium tends to deposit in dendrites slightly during charging with the fifth electric current density I5. That is, with a shallow DOD, no great change occurs on charging time when any of the first and second profile is selected, and thus it is preferable to select the first profile that is more advantageous for the capacity retention rate.

Meanwhile, when the DOD at the time of charging start is deep (DOD = 80%), by using the second profile, the charging time is significantly shortened. That is, using the second profile, compared with the case where the first profile is used, the charging time is shortened from 3.04 hours to 2.72 hours, by 0.32 hours.

When the DOD is 52%, the advantage of shortening the charging time is just a little, thus the DOD threshold for the border between the first charging profile and second charging profile is preferably set to at least 5 0% or more. Furthermore, when the DOD is 80%, the advantage of shortening of the charging time is significant, and therefore the DOD threshold is set to, for example, preferably 70% or less.

### <Comparative Example 2>

Next, using the battery after the preliminary charge/discharge, a charge/discharge cycle test was performed, in which charging is performed under a 25°C environment with a comparative profile below, setting the DOD at the time of charging start as 52%, and omitting the charging step S11 from the first profile.

### <Comparative profile>

(1) DOD at start of charging: 52% (voltage 3.75 V)
(2) Charging step S12
   Electric current density: 4 mA/cm²
   Amount of charged electricity: 100% of total amount of charged electricity P1
   Charging termination voltage: 4.1 V
(3) Constant voltage charge subsequent to S12
   Constant voltage charge at 4.1 V until the electric current reached 0.02 C (electric current density 0.2 mA/cm²)
(4) Discharge
   After 10 minutes rest, constant current discharging at 0.6 C (electric current density 6.0 mA/cm²) until the voltage reached 3.75 V

Table 3 shows the capacity retention rate after 60 cycles compared with the case where charging based on the first profile is performed.

**[Table 3]**

| DOD | No. of charging steps | I1 (mA/cm²) | Q1 (%) | I2 (mA/cm²) | Q1+Q2 (%) | Capacity retention rate (%) |
|---|---|---|---|---|---|---|
| 52% | 2 | 1 | 15 | 4 | 100 | 97.2 |
| 52% | 1 | - | 0 | 4 | 100 | 94.2 |

The results in Table 3 shows that even when the DOD at the time of charging start is shallow, the capacity retention rate decreases when charging is not performed based on the first charging profile including the at least two charging steps.

### [Industrial Applicability]

The charging method and charging system of the present disclosure is suitably used for charging of a type of lithium secondary battery in which lithium metal deposits on the negative electrode current collector during charging, and the lithium metal dissolves during discharging.

### [Reference Signs List]

- 1: Electrode Group
- 2: Positive Electrode Lead
- 3: Negative Electrode Lead
- 4: Battery Case
- 5: Sealing Plate
- 6: Negative Electrode Terminal
- 7: Gasket
- 8: Sealing Plug
- 11: Non-aqueous Electrolyte Secondary Battery
- 12: Charging device
- 13: External power source
- 14: Charging control unit
- 15: Voltage detection unit
- 16: Electric current detection unit

## Claims

1. A method of charging a secondary battery, the secondary battery including a positive electrode, a negative electrode including a negative electrode current collector, and a non-aqueous electrolyte, wherein during charging, lithium metal deposits in the negative electrode, and during discharging, the lithium metal dissolves in the non-aqueous electrolyte, the method including:
a step of charging the secondary battery based on any of a first charging profile and a second charging profile, wherein
the first charging profile includes at least two charging steps,
the second charging profile includes more charging steps than the first charging profile,
at a starting point of the step of charging the secondary battery,
the first charging profile is selected when the secondary battery has a depth of discharge of less than a predetermined threshold, and
the second charging profile is selected when the secondary battery has a depth of discharge of the threshold or more.

2. The method of charging a secondary battery of claim 1, wherein the threshold for the depth of discharge is, 50% or more and 70% or less.

3. The method of charging a secondary battery of claim 1 or 2, wherein the first charging profile includes
a charging step S11 at a first electric current density I1, and a subsequent charging step S12 at a second electric current density I2 higher than the first electric current density I1, and
the second charging profile includes
a charging step S21 at a third electric current density I3, and a subsequent charging step S22 at a fourth electric current density I4 higher than the third electric current density I3.

4. The method of charging a secondary battery of claim 3, wherein the second charging profile has a charging step S23 subsequent to the charging step S22 at a fifth electric current density I5 higher than the fourth electric current density I4.

5. The method of charging a secondary battery of claim 3 or 4, wherein the third electric current density I3 is smaller than the first electric current density I1.

6. The method of charging a secondary battery of any one of claims 3 to 5, wherein I1/I2> I3/I4 is satisfied.

7. The method of charging a secondary battery of claim 6, wherein an amount of charged electricity Q1 in the charging step S11, an amount of charged electricity Q2 in the charging step S12, an amount of charged electricity Q3 in the charging step S21, and an amount of charged electricity Q4 in the charging step S22 satisfy Q1/Q2 < Q3/Q4.

8. The method of charging a secondary battery of any one of claims 3 to 7, wherein the first electric current density I1 is 3.0 mA/cm² or less, and the second electric current density I2 is 4.0 mA/cm² or more.

9. The method of charging a secondary battery of any one of claims 3 to 8, wherein the amount of charged electricity in the charging step S11 is 5% or more and 15% or less of the total amount of charged electricity in the step of charging the secondary battery.

10. The method of charging a secondary battery of any one of claims 3 to 9, wherein the third electric current density is 1 mA/cm² or less,
the fourth electric current density is larger than the third electric current density, and 4 mA/cm² or less, and
the fifth electric current density is larger than the fourth electric current density, and 4 mA/cm² or more.

11. The method of charging a secondary battery of any one of claims 3 to 10, wherein the amount of charged electricity in the charging step S21 is 5% or more and 15% or less of the total amount of charged electricity in the step of charging the secondary battery.

12. The method of charging a secondary battery of claim 11, wherein an amount of charged electricity in the charging step S21 and the charging step S22 in total is 50% or less of the total amount of charged electricity.

13. The method of charging a secondary battery of any one of claims 1 to 12, wherein the negative electrode current collector is a copper foil or a copper alloy foil.

14. The method of charging a secondary battery of any one of claims 1 to 13, wherein the negative electrode includes the negative electrode current collector, and a sheet form lithium metal attached to a surface of the negative electrode current collector.

15. The method of charging a secondary battery of any one of claims 1 to 14, wherein the positive electrode includes a composite oxide including lithium and a metal Me other than lithium, and
the metal Me includes at least a transition metal.

16. The method of charging a secondary battery of claim 15, wherein a molar ratio of a total amount of Li included in the positive electrode and the negative electrode, mLi, relative to an amount of the metal Me included in the composite oxide, mMe: mLi/mMe is 1.2 or less.

17. The method of charging a secondary battery of claim 15 or 16, wherein the composite oxide has a layered rock salt type crystal structure, and the metal Me includes Ni at least as the transition metal.

18. The method of charging a secondary battery of claim 17, wherein the composite oxide is represented by a general formula (1): LiₐNi_{b}M_{1-b}O₂,
in the general formula (1), 0.9 ≤ a ≤ 1.2 and 0.65 ≤ b ≤ 1 are satisfied, and
M is at least one element selected from the group consisting of Co, Mn, Al, Ti, Fe, Nb, B, Mg, Ca, Sr, Zr, and W.

19. The method of charging a secondary battery of any one of claims 1 to 18, wherein the non-aqueous electrolyte includes a lithium ion and an anion, and the anion includes an anion of an oxalate complex.

20. The method of charging a secondary battery of claim 19, wherein the anion of the oxalate complex includes difluorooxalateborate anion.

21. A secondary battery charging system comprising: a secondary battery, a DOD detector that detects a depth of discharge of the secondary battery, and a charging control unit that controls charging of the secondary battery, wherein
the secondary battery includes a positive electrode, a negative electrode including a negative electrode current collector, and a non-aqueous electrolyte, wherein during charging, lithium metal deposits in the negative electrode, during discharging, the lithium metal dissolves in the non-aqueous electrolyte,
the DOD detector measures a depth of discharge of the secondary battery before a start of charging of the secondary battery,
the charging control unit controls charging of the secondary battery based on any of a first charging profile and a second charging profile,
the first charging profile includes at least two charging steps,
the second charging profile includes more charging steps than the first charging profile, and
the first charging profile is selected when the depth of discharge is less than a predetermined threshold, and the second charging profile is selected when the depth of discharge is the threshold or more.
